# EUROPEAN PATENT APPLICATION

(11) **EP 0 633 488 A1**
(43) Date of publication of application: **11.01.1995**
(21) Application number: 94110426.7
(22) Date of filing: 05.07.1994
(51) Int. Cl.: G02F 1/09, G09F 9/37

(54) **Magnetic fluid display, image display controlling apparatus for the magnetic fluid display, and method of making the same**

(30) Priority: 05.07.1993 JP 191787/93; 02.10.1993 JP 270063/93; 30.05.1994 JP 141124/94
(71) Applicant: Kabushikigaisya KEIOU, Tokyo 105 (JP)
(72) Inventor: Miyazawa, Kuniaki, Niza-shi, Saitama (JP)
(74) Representative: von Samson-Himmelstjerna, Friedrich R., Dipl.-Phys.

(57) **Abstract**

A display is provided which is easy in the fabrication, highly resistive to heat and ultraviolet ray, and suited for a large-screen. The magnetic fluid display comprises a magnetic fluid display board (1) having a magnetic fluid (4) which contains magnetic particles (4A) dispersed uniformly and suspended constantly and is filled in a space provided between two equally spaced transparent panels (2), and an image display controlling means (5) for generating selectively in response to the data of an image signal a matrix of magnetic fields towards pixel areas on and across the thickness of the magnetic fluid display board. When the magnetic fluid in the magnetic fluid display board is activated by a desired number of the magnetic fields determined by the image signal, its magnetic particles are controlled in the orientation. Accordingly, a combination of resultant light passing and light blocking areas of the pixels will is created in the magnetic fluid forming an image.

## Description

### FIELD OF THE INVENTION

The present invention relates to an electronic display and more particularly, a magnetic fluid display using a novel magnetic fluid therein and to an image display controlling apparatus for use with the magnetic fluid display and its producing method.

Liquid crystal displays have widely been utilized in calculators, personal computers, and television receivers because of its space-saving size and visual quality.

The display screen of such a known liquid crystal display is somewhat a combination of tiny ICs which are too delicate to permit dusts of micrometers in size during the production. Therefore, the production of liquid crystal displays is hardly guaranteed for high yield, delivering an negligible number of defectives.

Generally speaking, the liquid crystal displays in the current market are not uniform in the quality and difficult in reducing the cost, suffering from some substantial technical problems.

In particular, the liquid crystal displays have a disadvantage such that the screen is limited to a small size but not a large size because of its difficulty of fabrication.

It is also admitted that the liquid crystal displays are rather inferior in the resistance to heat and ultraviolet ray due to their materials, thus rarely ensuring the durability.

The applicants of the present invention have developed and invented a novel magnetic fluid display which is easy in the fabrication, highly resistive to heat and ultraviolet ray, and applicable to a large-size screen, thus eliminating the foregoing problems of conventional liquid crystal displays.

The magnetic fluid display according to the present invention is intended to be used as a large-screen display and more specifically, a on-the-wall display.

For minimizing the space of installation on a wall, it is requested for the magnetic fluid display to have the thickness reduced to as small as possible not to project too much from the installed wall.

It is also an object of the present invention, in view of satisfying the above request, to provide an image display controlling apparatus for the magnetic fluid display in which the behaviour of a magnetic fluid is correctly controlled with the use of small currents and a method of producing the same.

### SUMMARY OF THE INVENTION

A magnetic fluid display according to the present invention which has a display unit carrying a multiplicity of pixel areas thereof arranged variable in the transmittance of light with image data, comprises: a magnetic fluid display board comprising a magnetic fluid which contains magnetic particles dispersed uniformly and suspended constantly and is filled in a space provided between two equally spaced transparent panels; and an image display controlling means for generating selectively in response to the image data a matrix of magnetic fields towards the pixel areas on and across the thickness of the magnetic fluid display board to act upon the magnetic fluid.

### BRIEF DESCRIPTION OF THE DRAWINGS

Fig. 1 is a schematic view explaining a magnetic fluid display of the present invention;
Figs. 2(a) and 2(b) are explanatory views showing the behaviour of a magnetic fluid with the absence and the presence of a magnetic field respectively;
Fig. 3 is an explanatory view of Example 1 of the magnetic fluid display according to the present invention;
Fig. 4 is an explanatory view showing an image display controlling system in Example 1;
Fig. 5 is an explanatory view of a first electrode pattern provided on the front side of a magnetic field generator substrate in Example 1;
Fig. 6 is an explanatory view of a second electrode pattern provided on the back side of the magnetic field generator substrate in Example 1;
Fig. 7 is an enlarged view explaining a spiral electrode of the first electrode pattern of the magnetic field generating layer in Example 1;
Fig. 8 is a cross sectional view taken along the line VIII-VIII of Fig. 7;
Fig. 9 is an explanatory view showing an action in the magnetic fluid display of Example 1;
Fig. 10 is a schematic view explaining Example 2 of the magnetic fluid display;
Fig. 11 is a plan view showing a magnetic fluid display board in Example 3;
Fig. 12 is an explanatory view showing a display cell unit in Example 4;
Fig. 13 is a cross sectional view of a pixel area of the magnetic fluid display board in Example 3;
Fig. 14 is a cross sectional view explaining a magnetic fluid display board in Example 4;
Fig. 15 is an explanatory view of an image display controlling apparatus of the magnetic fluid display according to the present invention;
Fig. 16 is an explanatory view showing Example 5 of the magnetic fluid display;
Fig. 17 is an enlarged view showing the region III of Fig. 16;
Fig. 18 is a cross sectional view taken along the line IV-IV of Fig. 17;
Fig. 19 is a schematic view explaining a display unit in Example 5;
Fig. 20 is a detailed cross sectional view of a color filter sheet and a magnetic fluid display board in Example 5;
Fig. 21 is an explanatory view showing the substantial arrangement of a magnetic field generator substrate in Example 5;
Figs. 22(a) and 22(b) are explanatory views showing the two, front and back, sides of a first magnetic field generating layer #1 respectively in Example 5;
Figs. 23(a) and 23(b) are explanatory views showing the two, front and back, sides of a second magnetic field generating layer #2 respectively in Example 5;
Figs. 24(a) and 24(b) are explanatory views showing the two, front and back, sides of a sixth magnetic field generating layer #6 respectively in Example 5;
Fig. 25 is a plan view explaining the positional relation between spiral-pattern electrode segments on the magnetic field generating layer in Example 5;
Fig. 26 is a cross sectional view of the same;
Fig. 27 is an explanatory view showing a method of producing the magnetic field generator substrate;
Fig. 28 is an explanatory view showing the relation between a multi-turn coil and a diode in fabrication of multi-turn coil in Example 5;
Fig. 29 is an explanatory view showing a manner of mounting the diode shown in Example 5;
Fig. 30 is an explanatory view showing the installation of the diode shown in Example 5;
Fig. 31 is an explanatory view showing the positional relation between the multi-turn coil and the diode after installation in Example 5;
Fig. 32 is a schematic view showing an action in the magnetic fluid display of Example 5;
Fig. 33 is a plan view showing a primary part of the magnetic fluid display board provided with a location plate;
Fig. 34 is a cross sectional view taken along the line V-V of Fig. 33; and Fig. 35 is a view showing a modification of the location plate.

### DESCRIPTION OF THE PREFERRED EMBODIMENTS

Preferred embodiments of the present invention will be described in more details referring to the accompanying drawings.

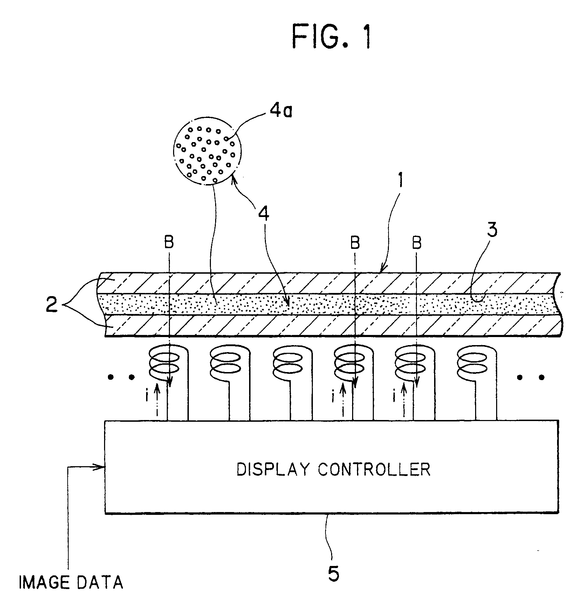

The present invention has been envisaged and invented in the form of a magnetic fluid display by means of controlling a magnetic fluid in the magnetic field. As shown in Fig. 1, the magnetic fluid display of the present invention comprises a magnetic fluid display board 1 having a magnetic fluid 4, in which magnetic particles 4a are dispersed and suspended in a stable state, filled in a space 3 between two parallelly spaced transparent panels 2, 2 and an image display controlling means 5 having a matrix structure which corresponds to a multiplicity of pixels in the magnetic fluid display board 1 for producing a magnetic field B across the thickness of the magnetic fluid display board 1 selectively in response to image data of each pixel to orientate the magnetic fluid 4.

In the above technical arrangement, the magnetic particles 4a in the magnetic fluid 4 may be selected from ferrite, ferric oxide, nickel, molybdenum disulfide, and others. The magnetic particles 4a are as small as possible to be dispersed uniformly and suspended constantly, preferably 0.001 to 10 micrometers in the diameter.

The magnetic fluid 4 which allows the magnetic particles 4a to be uniformly dispersed and constantly suspended can be prepared by mixing the magnetic particles 4a with a surface active agent solution at a desired ratio for application or by suspending in an appropriate fluid, e.g. water, a high concentration of the magnetic particles 4a stably dispersed with the use of a surface active agent.

The distance in the space 3 between the two transparent panels 2, 2 may be equal to a row of at least some of the magnetic particles 4a and more preferably, is tens to hundreds times greater than the diameter of the magnetic particle 4a (generally, several to hundreds micrometers) to ensure the opaqueness of the magnetic fluid in the suspended state.

The magnetic fluid 4 in the magnetic fluid display board 1 may continuously be distributed throughout the screen area or separated into small compartment.

In the latter case, a given number of the magnetic fluid compartments are grouped in association with corresponding pixels to form a joinable display cell unit. Accordingly, a larger size of the display will be constructed when a desired number of the joinable display cell units are joined together.

The image display controlling means 5 is provided for selectively generating the magnetic field B (across the thickness of the magnetic fluid display board 1) in response to an image control signal of each pixel of the magnetic fluid display plate 1. For example, the magnetic field B is produced by energizing a pattern electrode or solenoid coil for the pixel with a given magnetizing current or directly by applicable magnetizing means.

The magnetic field generator unit of the image display controlling means 5 may be formed integral with the transparent panel 2 of the magnetic fluid display board 1 or arranged separately of the same.

It should be noted that when the magnetic fluid display board 1 is of light transmission type, the magnetic field generator unit of the image display controlling means 5 is designed not to interrupt the transmission of light. If the magnetic fluid display board 1 is employed of a light reflection type where a reflector layer is disposed on one side, the magnetic field generator unit of any light blocking type is successfully used as mounted on the back of the reflector layer.

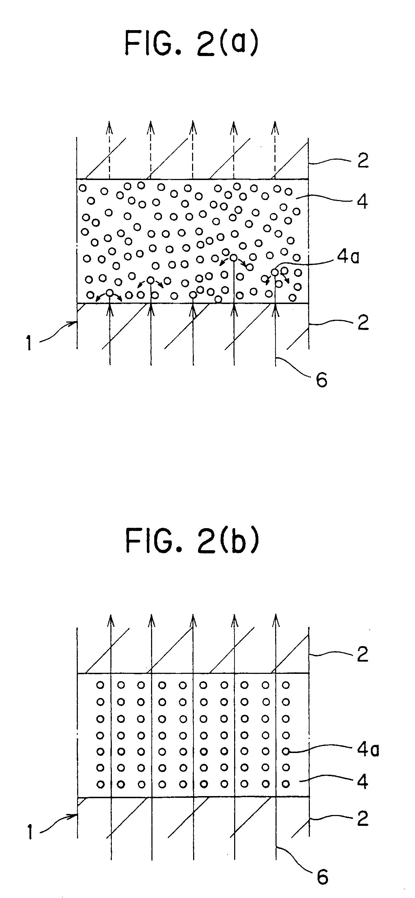

In the foregoing arrangement, the magnetic fluid 4 remains opaque with the magnetic particles 4a being uniformly suspended in the stable dispersed state, as shown in Fig. 2(a), when the magnetic field B relative to a corresponding pixel of the magnetic fluid display board 1 is not generated by the image display controlling means 5 due to the attribute of an image control signal. As the result, the transmission of light 6 is interrupted at the pixel by the uniformly dispersed state of the magnetic particles 4 in magnetic fluid 4.

When the solenoid coil of the pixel is energized with a magnetizing current i of the image display controlling means 5 in response to an image control signal, it produces the magnetic field B. As the action of the magnetic field B causes the magnetic particles 4a in the magnetic fluid 4 to align in straight rows, as shown in Fig. 2(b), the light 6 is not completely blocked by but passed between the rows of the magnetic particle 4a in the pixel.

Accordingly, a combination of light passing areas and light blocking areas on the magnetic fluid display board 2 determined by image data will produce an image pattern in the magnetic fluid 4.

### Example 1

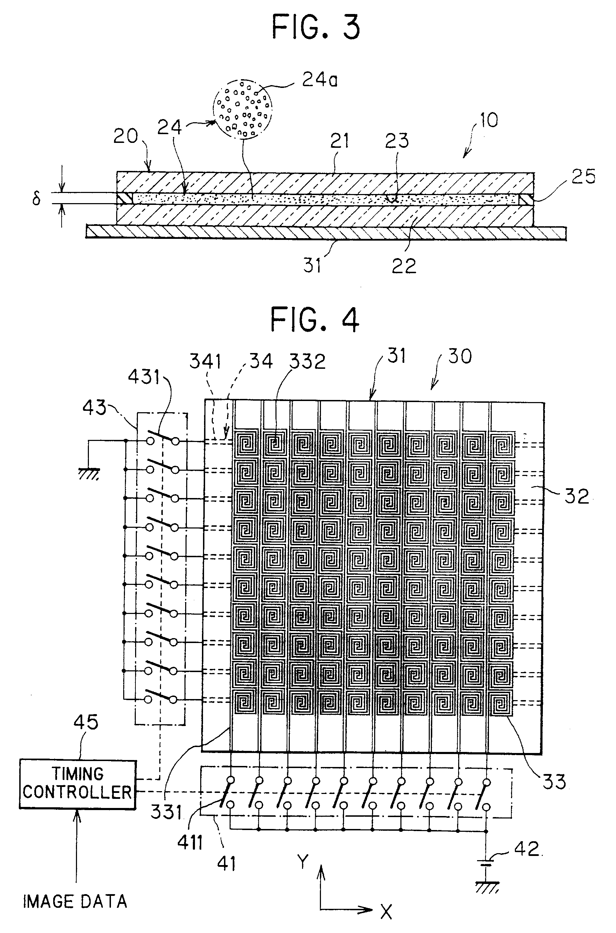

Fig. 3 illustrates a first exemplary arrangement of the magnetic fluid display according to the present invention.

As shown, the magnetic fluid display denoted by 10 comprises a magnetic fluid display board 20 and an image display controller system 30 for controlling the magnetic fluid display board 20 in pixels for display of an image.

In this example, the magnetic fluid display board 20 has a pair of glass plates 21, 22 spaced by a distance delta (about 200 micrometer in Example 1) from each other and a magnetic fluid 24 filled in a space 23 between the two glass plates 21, 22. The magnetic fluid 24 is a mixture of ferrite in the form of magnetic particles 24a of 0.1 micrometer in diameter and a surface active agent solution (e.g. fatty acid liquid soap). Also, a sealing spacer 25 is provided extending around the space 23 between the two glass plates 21, 22.

The image display controller system 30 has a magnetic field generating substrate 31 fixedly mounted to the outer surface of the glass plate 22 of the magnetic fluid display board 20.

The magnetic field generating substrate 31 comprises a first transparent pattern electrode 33 arranged on the magnetic fluid display board 20 side or front surface of a glass 32 and a second transparent pattern electrode 34 arranged on the back surface of the same by a known elaborate process as shown in Figs. 4 to 8.

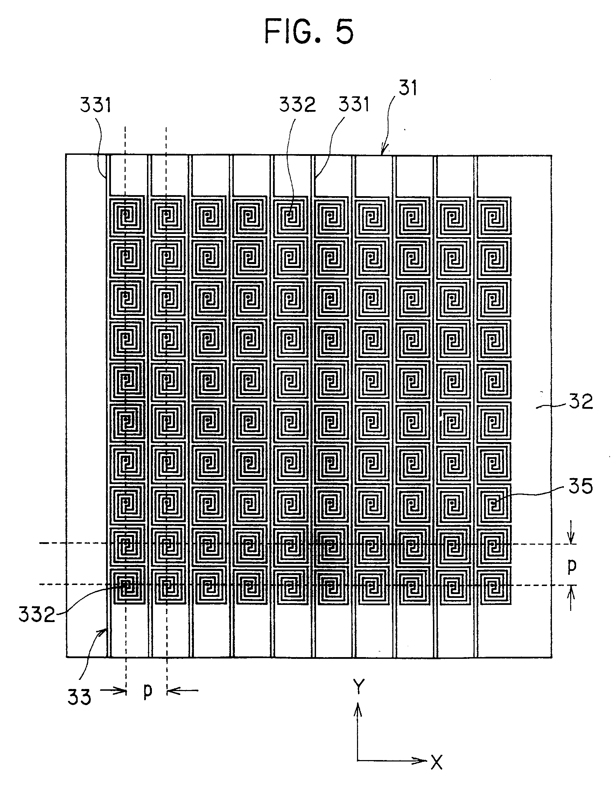

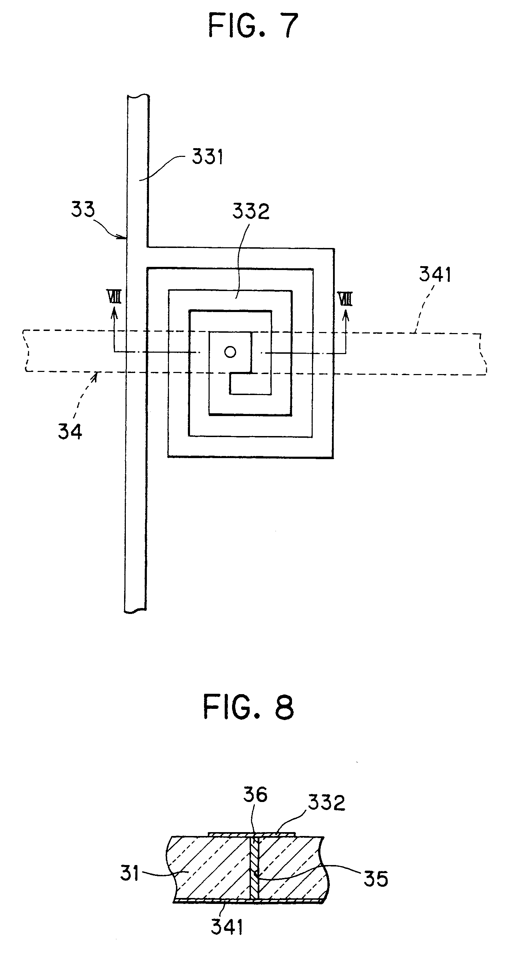

The first pattern electrode 33 comprises a series of X-direction common line electrodes 331 arranged at equal intervals in the X-direction as best shown in Figs. 5 and 7, and a multiplicity of spiral pattern electrodes 332 arranged along and extending clockwisely from the X-direction common electrodes 331. More particularly,the clockwisely extending spiral electrodes 332 are arrayed in both the X and Y directions forming a matrix where the distance between two adjacent centers of the spiral pattern electrodes 332 is designated as a pixel pitch p.

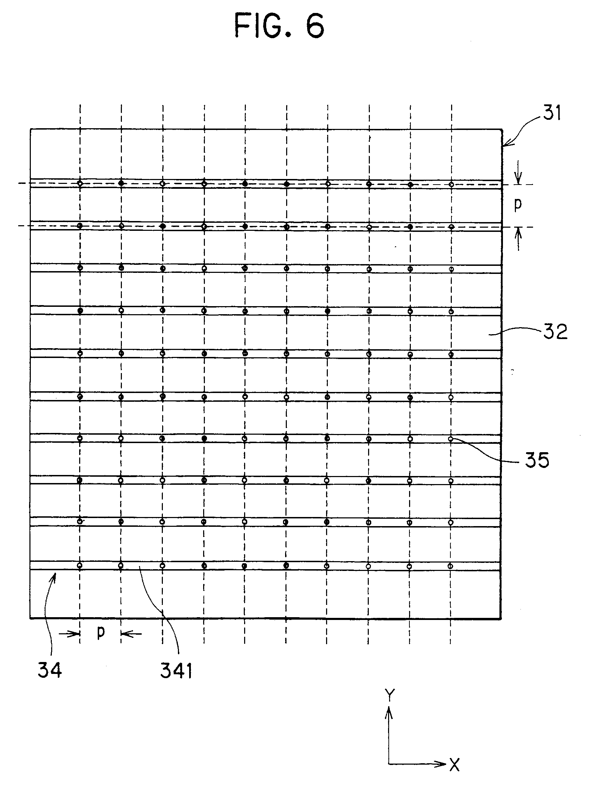

The second pattern electrode 34 comprises a series of Y-direction common electrodes 341 arranged at equal intervals of the pixel pitch p in the Y-direction and extending across the centers of the spiral pattern electrodes 332 as best shown in Figs. 6 and 7.

The glass plate 32 has a plurality of through holes 35 therein each extending across the center of the spiral pattern electrode 332 as shown in Fig. 8. A conductor electrode 36 is provided as filled in each of the through holes 35 for electrical connection between the spiral pattern electrode 332 at upper and the Y-direction common electrode 341 at lower.

The X-direction common electrodes 331 of the first pattern electrode 33 are connected at one end by corresponding switch elements 411 of an X-direction matrix switch 41 to a power source 42, as shown in Fig.4.

Also, the Y-direction common electrodes 341 of the second pattern electrode 34 are connected at one end by corresponding switch elements 431 of a Y-direction matrix switch 43 to the ground, as shown in Fig. 4. The entire lines of the first and second pattern electrodes 33, 34 are coated with a transparent insulating layer.

The X-direction and Y-direction matrix switches 41, 43 are adapted for on/off switching in response to timing signals from a timing controller 45. More specifically, the timing controller 45 determines a sequence of the on/off actions of the two matrix switches 41 and 43 to activate a given number of the pixels corresponding to an image signal.

The action of the magnetic fluid display 10 of Example 1 will now be explained.

On receipt of an image signal, the timing controller 45 actuates the X-direction and Y-direction matrix switches 41, 43 for a sequence of the on/off actions according to the information of the image signal.

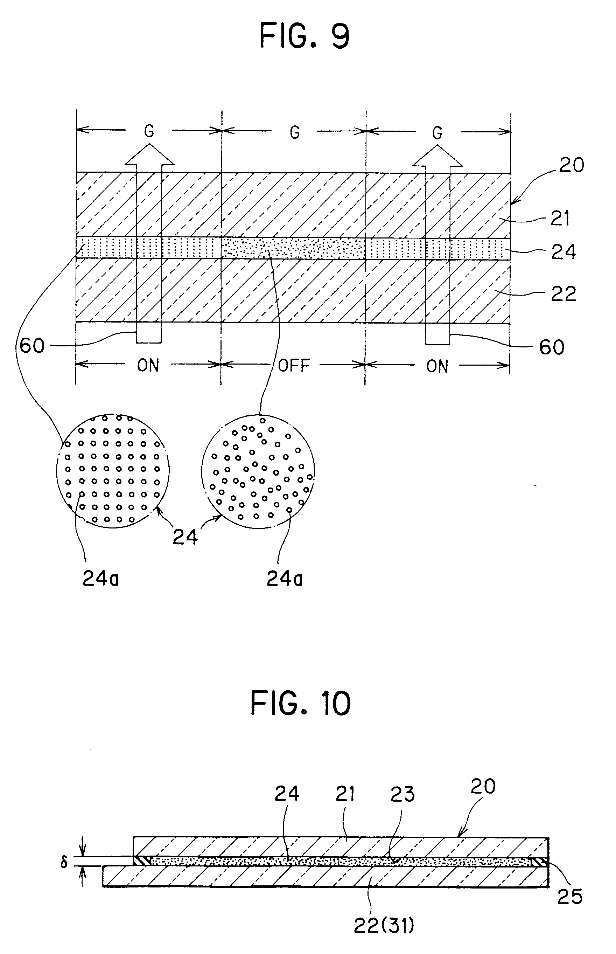

It is assumed that the information of the image signal is "0" for a particular pixel causing any of the two corresponding switch elements 411 and 431 of the X-direction and Y-direction matrix switches 41, 43 to be opened. Accordingly, no current is supplied to the spiral pattern electrode 332 at the pixel and a portion of the magnetic fluid 24 allocated in the area G of the pixel is affected by no magnetic field and remains in the OFF state, as shown in Fig. 9.

As the magnetic particles 24a in the area G remain suspended in the stable dispersed state, the magnetic fluid 24 is opaque not allowing the light to pass through. When the image signal is "1" for a pixel and the two corresponding switch elements 411 and 431 of both the X-direction and Y-direction matrix switches 41, 43 are closed, the spiral pattern electrode 332 at the pixel is energized generating a magnetic field B. Accordingly, the magnetic fluid 24 in the area G of the activated pixel is exposed to the magnetic field B as turned to the ON state.

As the result, the magnetic particles 24a of the magnetic fluid 24 in the area G of the ON state are aligned in the direction of the magnetic field B thus allowing an amount of light 60 to pass through.

A combination of the light passing areas and the light blocking areas on the magnetic fluid display board 20 will thus produce an image pattern of the magnetic fluid.

### Example 2

Fig. 10 illustrates a second exemplary arrangement of the magnetic fluid display according to the present invention.

As shown, a magnetic fluid display board 20 like that of Example 1 has a magnetic fluid 24 filled in a space 23 between two glass plates 21 and 22 which are spaced the distance delta (about 200 micrometer in Example 2) by a spacer 25 from each other. Example 2 is distinguished from Example 1 by the fact that the glass plate 22 of the magnetic fluid display board 20 serves as a magnetic field generating substrate 31 of the image display controlling system (similar in the construction to that of Example 1). The glass plate 22 is coated on both, front and back, sides with transparent insulating layers.

The magnetic fluid display board of Example 2 is substantially identical in the function to that of Example 1 but its advantage over the previous example is such that the generation of a magnetic field by an image signal takes place directly to the magnetic fluid 24. Accordingly, while the effect of the magnetic field on the magnetic fluid 24 is higher, the energization of a spiral pattern electrode 332 may be carried out with a smaller current.

### Example 3

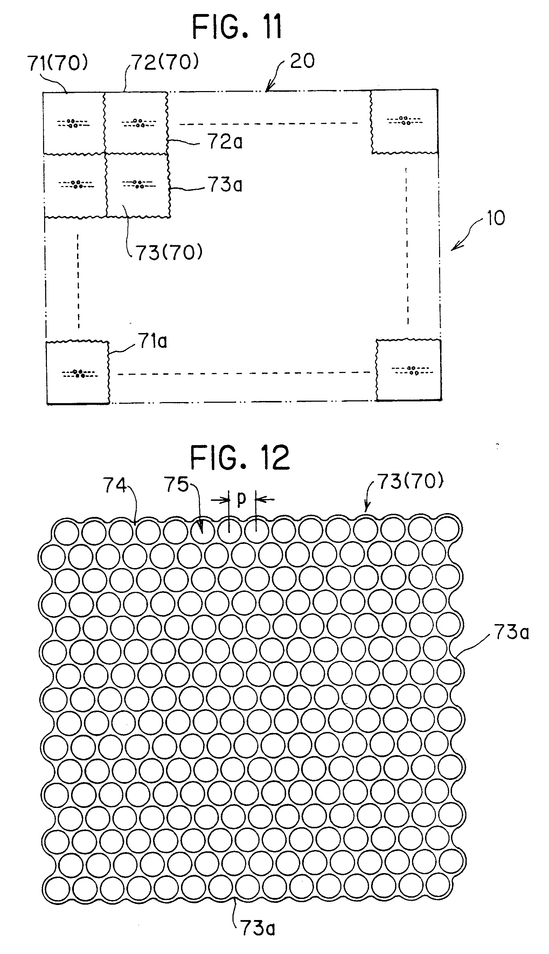

Fig. 11 shows a third exemplary arrangement of the magnetic fluid display according to the present invention.

As shown, a magnetic fluid display board 20 of the magnetic fluid display 10 comprises a plurality of substantially square shaped display cell units 70 joined to one another to form one display screen.

In this arrangement, the display cell units 70 are classified to a corner cell 71 having two adjacent sides arranged straight and two other sides 71a shaped to a waveform for joining, an edge cell 72 having one side arranged straight and three other sides 72a shaped to the waveform, and an inner cell 73 having four sides 73a shaped to the waveform for joining, as shown in Fig. 11.

More specifically, the inner cell 73 of the display cell unit 70 comprises a multiplicity of magnetic fluid filled spots 75 arrayed at equal intervals of a pixel pitch p on an aluminum cell substrate 74, as shown in Fig. 12.

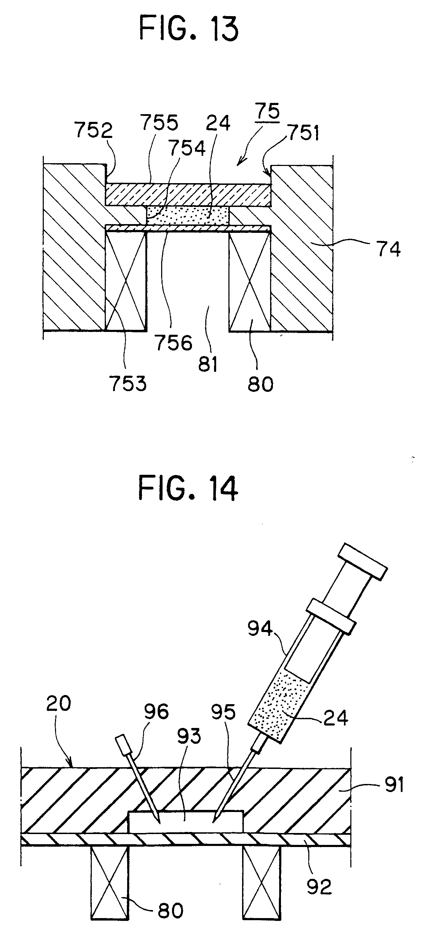

The magnetic fluid filled spot 75 is shown in a cross sectional view of Fig. 13.

As shown, the cell substrate 74 has a corresponding number of apertures 751 arranged therein at the intervals of the pixel pitch p. The aperture 751 comprises an upper radially enlarged region 752 on the front side having a large diameter (3 mm in this arrangement) and a small depth, a lower radially enlarged region 753 on the back side having a large diameter (also, 3 mm) and a large depth, and a magnetic fluid filled compartment 754 at the center defined between the two radially enlarged regions 752 and 753 and having a smaller diameter (2 mm in this arrangement) than that of the same and a minimal depth (200 micrometer).

A color filter 755 for transmitting one of the three original colors R(red), G(green), and B(blue) is accommodated in the upper radially enlarged region 752 as fixedly bonded to the inner wall of the aperture 751. A transparent glass sheet 756 is fitted into the innermost of the lower radially enlarged region 753. Accordingly, the magnetic fluid filled compartment 754 is closing sealed off at both sides by the color filter 755 and the glass sheet 756.

More particularly, a given amount of the magnetic fluid 24 is applied into the magnetic fluid filled compartment 754 after installation of the glass sheet 756 and before sealing with the color filter 755.

In addition, a solenoid coil 80 comprising a given number of windings is attached to the inner wall of the lower radially enlarged region 753 of the aperture 75 so that the light path extends through a center hollow 81 of the solenoid coil 80.

The solenoid coil 80 is selectively energized by an image control signal from an image display controlling system similar to that of Example 1 to generate a magnetic field across the thickness of the magnetic fluid display board 20 for activating the magnetic fluid 24 in the magnetic fluid filled spot 75 of a pixel.

More specifically, the solenoid coil 80 upon receiving a current of the image signal generates a magnetic field which runs through the magnetic fluid 24 in the magnetic fluid filled spot 75 so that magnetic particles of the magnetic fluid 24 are aligned in the direction of the magnetic field.

As the result, the magnetic fluid 24 is turned from the suspended state to the light transmitting state in the same action as of Example 1, thus allowing the light to pass through the spot 75 or pixel.

If the solenoid coil 80 is not energized, the magnetic fluid filled spot 75 remains opaque not allowing the transmission of light.

Accordingly, a combination of the light passing spots and the light blocking spots on the magnetic fluid display board 20 will thus produce an image pattern in the magnetic fluid 24.

By joining a predetermined number of the display cell units 70 (mainly, the cells 71 and 73) to one another, a desired display screen size comprising a matrix of m rows and n columns of pixels can be fabricated.

### Example 4

Fig. 14 illustrates a fourth exemplary arrangement of the magnetic fluid display according to the present invention, which is provided with a modification 20 of the magnetic fluid display board of Example 3.

As shown, the modified magnetic fluid display board 20 is fabricated by forming a multiplicity of magnetic fluid filled recesses 93 at equal intervals of a pixel pitch p in one of two transparent rubber panels 91 and 92, bonding the two transparent rubber panels 91 and 92 to each other with the recesses 93 located inside, inserting a needle 95 of an injector 94 and an air-breeding pin 96 across the transparent rubber panel 91 to each of its recesses 93, and filling the recess 93 with an amount of magnetic fluid 24 by the action of the injector 94. Also, a solenoid coil 80 which performs the same action as of Example 3 is associated with each of the recesses 93.

Accordingly, after completion of the filling of the magnetic fluid 24 and removal of the air-breeding pin 96, the needle and pin holes in the transparent rubber panel 91 are closed due to the resiliency, allowing the magnetic fluid 24 to be trapped without leakage.

Since a major assembly of the magnetic fluid display board 20 is completed before the filling of the magnetic fluid 24, the successive step of sealing the recesses 93 is not needed. The fabrication of the magnetic fluid display board 20 will thus be increased in the efficiency.

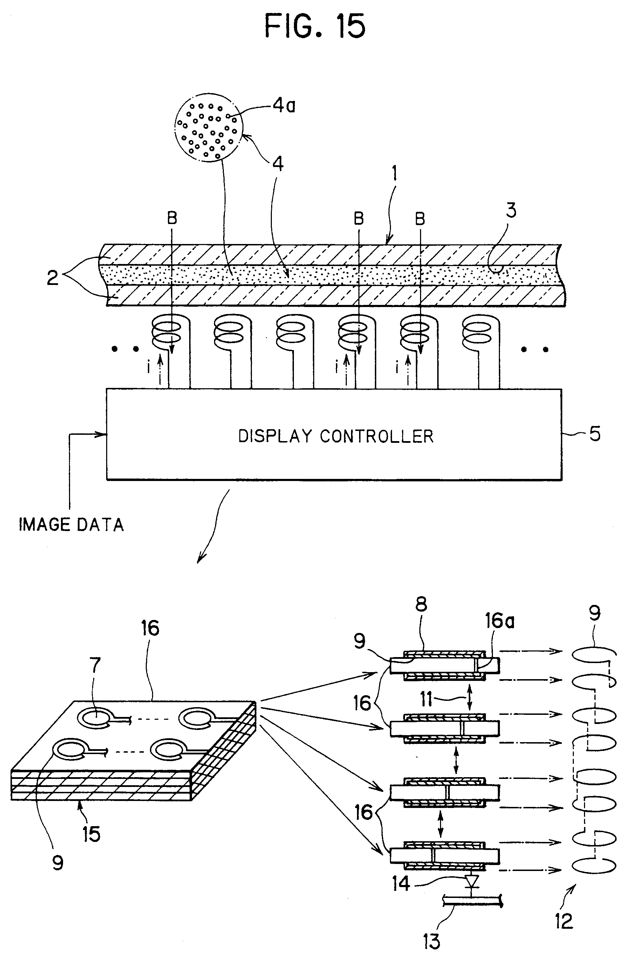

Also, the present invention will be described in the form of an image display controlling apparatus for use in a magnetic fluid display. As shown in Fig. 15, the image display controlling apparatus is mounted on the back side of a magnetic fluid display board 1, which comprises two transparent panels 2, 2 spaced from each other by a space 3 where a magnetic fluid 4 is filled with its magnetic particles 4a dispersed uniformly and sustained constantly, so that a magnetic field B is generated across the thickness of the magnetic fluid display board 1 by an image control signal assigned to one particular pixel for activating the magnetic fluid 4. More specifically, the image display controlling apparatus of the present invention comprises a magnetic field generator substrate 15 which consists mainly of a plurality of magnetic field generating layer 16. Each of the magnetic field generating layers 16 has a multiplicity of light transmitting spots 7 thereof corresponding to pixels arrayed at equal intervals of a pixel pitch on the magnetic fluid display board 1 and two spiral pattern electrode segments 9 mounted on both sides thereof to extend around the light transmitting spot 7. The spiral pattern electrode segment 9 is protected with an insulating coating 8. The two spiral pattern electrode segments 9 on both the sides are electrically coupled to each other through an aperture 16a provided in the magnetic field generating layer 16. Also, any two directly contacting spiral pattern electrode segments 9 between the magnetic field generating layers 16 are joined by a conductive bonding agent 11 to each other by connecting the terminal end of one segment to the start end of the other. Accordingly, a series of the spiral pattern electrode segments 9 constitutes a multi-turn coil 12 about the light transmitting spot 7 extending throughout the thickness of the magnetic fluid generator substrate 15. The multi-turn coil 12 is energized by an image control signal for activating the pixel.

In the above arrangement, the magnetic particles 4a in the magnetic fluid 4 may be selected from ferrite, ferric oxide, nickel, molybdenum disulfide, and others.

The magnetic particles 4a are as small as possible to be dispersed uniformly and suspended constantly, preferably 0.001 to 10 micrometers in the diameter. More preferably, the magnetic particles 4a are tiny strips of short fiber for distinguishing between the opaqueness and the transparency.

The magnetic fluid 4 which allows the magnetic particles 4a to be uniformly dispersed and constantly suspended can be prepared by mixing the magnetic particles 4a with a surface active agent solution at a desired ratio for application or by suspending in an appropriate fluid, e.g. water, a high concentration of the magnetic particles 4a stably dispersed with the use of a surface active agent.

The distance in the space 3 may be equal to a row of at least some of the magnetic particles 4a and more preferably, is much greater (generally, 0.5 mm to 2 mm) than the diameter of the magnetic particle 4a to ensure the opaqueness in the suspended state.

The magnetic fluid 4 in the magnetic fluid display board 1 may continuously be distributed throughout the screen area or separated into small compartments.

In the latter case, a given number of the magnetic fluid compartments are combined in association with corresponding pixels to form a joinable display cell unit. Accordingly, a larger size of the display will be constructed when a desired number of the j oinable display cell units are joined together.

The magnetic field generator substrate 15 may be isolated from the magnetic fluid display board 1 or formed integral with the transparent panel 2 of the same.

In the former case, if the magnetic field generator substrate 15 separated from the magnetic fluid display board 1 is damaged or injured, it can easily be replaced with a new one thus allowing the magnetic fluid display board 1 to remain intact and increase its operating life.

In the latter, the magnetic field generator substrate 15 acting as the transparent panel 2 of the magnetic fluid display board 1 is directly exposed to the magnetic fluid 4 and its magnetic field will penetrate the magnetic fluid more intensively. This allows the multi-turn coil 12 to be energized with a less current.

The light transmitting spots 7 in the magnetic field generating layer 16 can be used directly if the magnetic field generating layer 16 is transparent. If not, a given number of through holes for transmission of light are provided in the magnetic field generating layer 16 corresponding to the pixels. The light transmitting spot 7 may be arranged to a round, a square, or any other appropriate shape. Preferably, when the pixels of the magnetic fluid display board 1 are designated by magnetic fluid filled compartments, the shape of the light transmitting spot 7 is identical to that of the magnetic fluid filled compartments.

The spiral pattern electrode segment 9 is not limited to one turn around the light transmitting spot 7 on the magnetic field generating layer 16 but may have two or more turns if the space is available.

The conductive bonding agent 11 for joining a series of the spiral pattern electrode segments 9 together may be applied by printing of a conductive paint material. For simplicity of a production procedure, the conductive bonding agent 11 is a thermally fusible material such as a solder.

In practice, the procedure of producing the magnetic field generator substrate 15 having a plurality of the magnetic field generating layers 16 comprises the steps of forming a spiral-pattern electrode segment 9 around and an aperture beside each light transmitting spot 7 on the magnetic field generating layer 16, applying a conductive bonding agent 11 of a thermally fusible material between each two adjacent spiral-pattern electrode segments 9 on the side opposite to the aperture 16a opening side, and heating a set of the magnetic field generating layers 16 under pressure to a temperature required for fusing the conductive bonding agent 11.

The multi-turn coils 12 each for a pixel may be connected to their respective lines. For simplicity of the wiring, a number of the multi-turn coils 12 are coupled to one common line 13.

It should be noted that a current-flow regulator element 14 is serially mounted between the multi-turn coil 12 and the common line 13 for preventing a reverse flow of current from the common line 13 to the multi-turn coil 12.

The current-flow regulator element 14 is preferably a transparent glass-sealed diode located relative to the light transmitting spot 7 of the lowest magnetic field generating layer 16 for ease of the circuitry arrangement. It is a good idea to have the glass-sealed diode arranged to serve as an optical lens for focusing rays of light onto the corresponding pixel of the magnetic fluid display board 1.

A procedure of producing the image display controlling apparatus provided with the current-flow regulator elements 14 comprises the steps of forming a spiral-pattern electrode segment 9 around and an aperture beside each light transmitting spot 7 on the magnetic field generating layer 16 while applying a conductive bonding agent 11 of a thermally fusible material between each two adjacent spiral-pattern electrode segments 9 on the side opposite to the aperture 16a opening side, heating a set of the magnetic field generating layers 16 under pressure to a temperature required for fusing the conductive bonding agent 11 to constitute a multi-turn coil 12 extending across the thickness of the magnetic field generator substrate 15 but not connecting to the common line 13, and joining the multi-turn coil 12 at each pixel in the magnetic field generator substrate 15 to the common line 13 by a current-flow regulator element 14.

In action, the image display controlling apparatus performs a control action for either generating or not a magnetic field across a corresponding pixel on the magnetic fluid display board 1 in response to an image control signal. More specifically, it changes the orientation of the magnetic particles 4a of the magnetic fluid 4 in each pixel of the magnetic fluid display board 1 (to the opaque or transparent state) so that light can pass through a desired number of the pixels (See Fig. 2).

In the magnetic field generator substrate 15 comprising a given number of the magnetic fluid generating layers 16, each multi-turn coil 12 for producing a magnetic field across the pixel is constructed by a succession of the spiral pattern electrode segments 9 which are mounted on both the sides of each magnetic field generating layer 16 and joined to one another by the apertures 16a of the layers 16 and by direct application of the conductive bonding agent 11. Hence, the magnetic field B for the pixel is effectively generated by the multi-turn 12 which is fed with a current i of the image control signal, thus activating the magnetic fluid 24 of the pixel in the magnetic fluid display board 1.

As a group of the multi-turn coils 12 are connected to the common line 13 by their respective current-flow regulator elements 14 disposed in series, the reverse of a current flow from the common line 13 to the multi-turn coils 12 will be prevented.

### Example 5

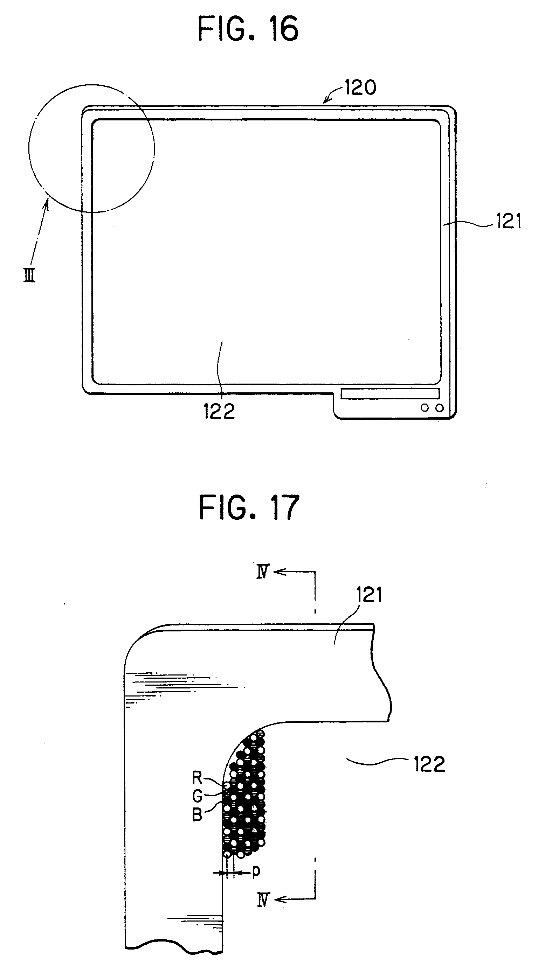

Figs.16 to 18 show an exemplary arrangement of the magnetic fluid display according to the present invention.

As illustrated, the magnetic fluid display 120 generally comprises a display unit 122 mounted in a rectangular frame 121. The display unit 122 with the magnetic fluid therein carries a multiplicity of R(red) pixels, G(green) pixels, and B(blue) pixels arrayed at equal intervals of a predetermined pitch p throughout the screen for color image.

A light diffuser plate 123 is mounted to the back of the display unit 122 and a given number of illumination lamps 124 are installed behind the light diffuser plate 123. There is a reflector 125 provided in the rear of the illumination lamps 124 for directing a light emitted from the lamps 124 towards the front.

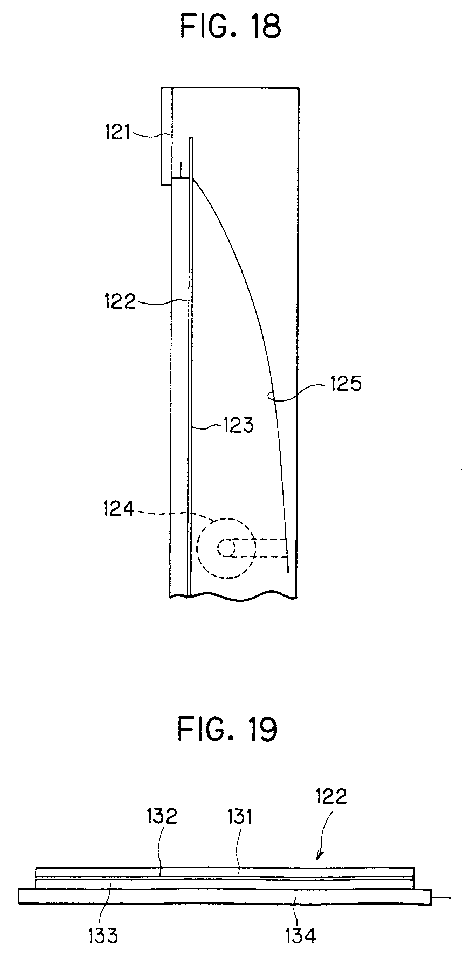

The display unit 122 of Example 5 comprises a surface cover 131 made of a transparent glass, a color filter sheet 132 mounted to the back of the surface cover 131, a magnetic fluid display board 133 mounted to the back of the color filter sheet 132, and a magnetic field generator substrate 134 mounted to the back of the magnetic fluid display board 133, as shown in Fig. 19.

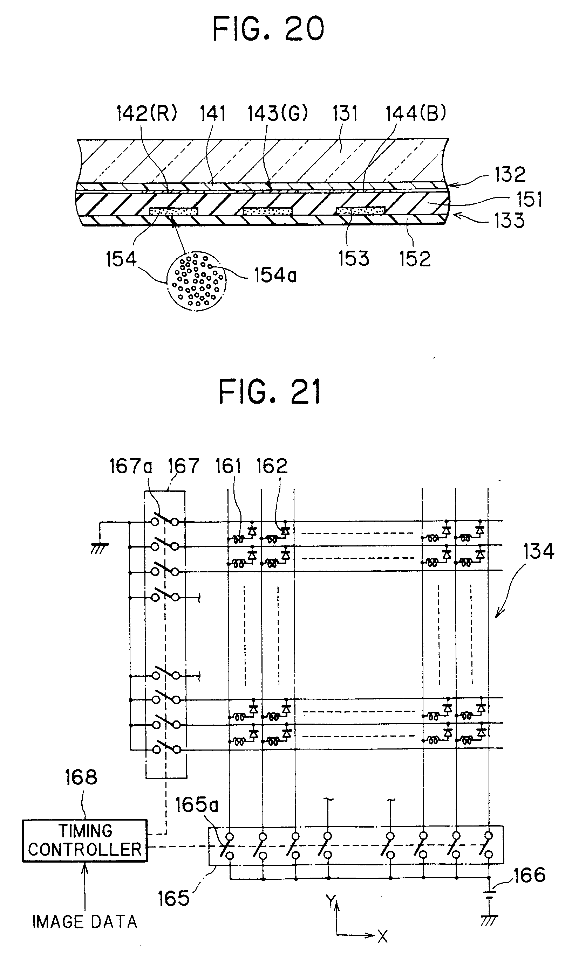

The color filter sheet 132 comprises red, green, and blue filters 142, 143, 144 arranged uniformly at equal intervals of the pixel pitch p over a transparent resin sheet 141, as best shown in Fig. 20.

Also shown in Fig. 20, the magnetic fluid display board 133 is fabricated by forming magnetic fluid filled recesses 153 at equal intervals of the pixel pitch p in the interface of one of two transparent rubber panels 151 and 152, joining tightly the two transparent rubber panels 151 and 152 to each other, inserting the needle of an injector and an air-breeding pin through the panel 151 to each magnetic fluid filled recess 153, and filling the recess 153 with a magnetic fluid 154 by the action of the injector.

In particular, the depth of the magnetic fluid filled recess 153 is about 1.5 mm. The magnetic fluid 154 is a mixture of a surface active agent solution (e.g. fatty acid soap) and magnetic particles 154a of ferrite in the form of a pellet (short fiber shape) having a diameter of 0.001 micrometer and a length of 0.01 micrometer combined at a proper ratio.

The magnetic field generator substrate 134 has a multi-turn coil 161 for each pixel, as shown in Fig. 21. Columns of the multi-turn coils 161 aligned in the X direction are connected by switch elements 165a of an X-direction matrix switch 165 respectively to a power source 166. Rows of the multi-turn coils 161 designated in the Y direction are connected by switch elements 167a of a Y-direction matrix switch 167 respectively to the ground.

The multi-turn coil 161 is associated with a diode 162 coupled to the (common) line which is grounded for permitting only the flow of current from the multi-turn coil 161 to the common line.

The on/off actions of both the X-direction matrix switch 165 and the Y-direction matrix switch 167 are controlled by timing signals of a timing controller 168. The timing signals of the timing controller 168 are determined by an image signal and assigned to the pixels of the magnetic fluid display board 133.

The construction of the magnetic field generator substrate 134 will now be explained in more details.

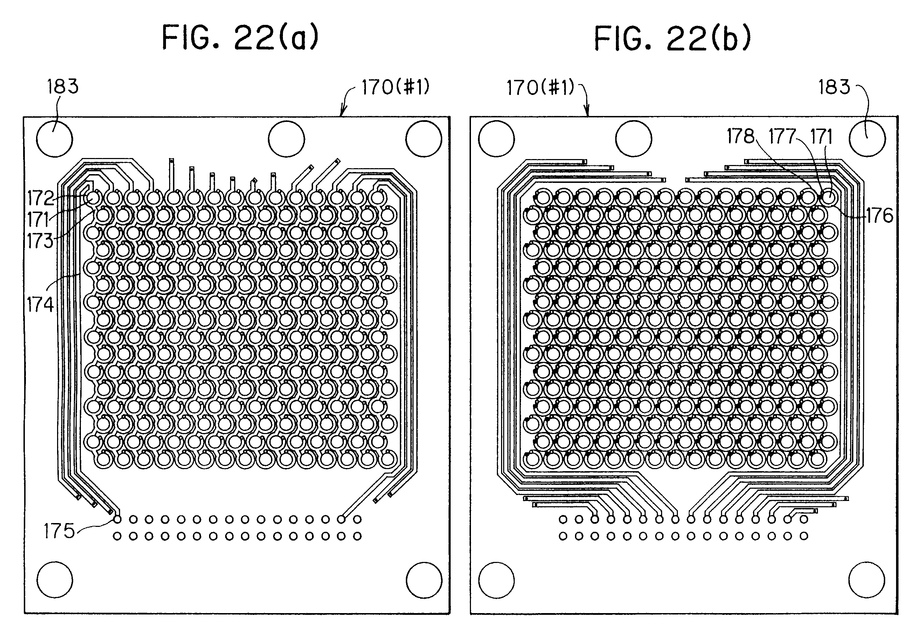

As shown in Figs. 22 to 24, the magnetic field generator substrate 134 comprises six magnetic field generating layers 170 (namely, #1 to #6) placed one over the other. For simplicity of the explanation, the number of X-direction pixels is 15 and the number of Y-direction pixels is 16 throughout Figs. 22 to 24.

Figs. 22(a) and 22(b) are schematic views of the front side and the back side of the first magnetic field generating layer 170 (#1) respectively.

The magnetic field generating layer 170 (#1) is made of a transparent resin material having the number of round-shaped light transmitting spots 171 allocated to the pixels.

As shown in Fig. 22(a), the number of spiral pattern electrode segments 172 having a shape of almost a full circle are disposed around the light transmitting spots 171 on the front side of the magnetic field generating layer 170 (#1) respectively. The spiral pattern electrode segments 172 in each column (although aligned not straightly but staggered to a half the pitch distance in the arrangement shown) are connected to one another by connecting lines 173. The columns of the spiral pattern electrode segments 172 arranged in the X direction are connected by lead lines 174 to X-direction terminals 175 respectively which are further communicated to an X-direction matrix switch 165 (See Fig. 21).

Similarly, the number of spiral pattern electrode segments 176 having a shape of almost a full circle are disposed around the light transmitting spot 171 on the back side of the magnetic field generating layer 170 (#1) respectively, as shown in Fig. 22(b).

The terminal end of the front side spiral pattern electrode segment 172 is connected through a through hole 177 of the magnetic field generating layer 170 (#1) to one end of the back side spiral pattern electrode segment 176 at each light transmitting spot 171 of the magnetic field generating layer 170 (#1). The other end of the back side spiral pattern electrode segment 176 which is not located at the through hole 177 side is provided with a solder 178.

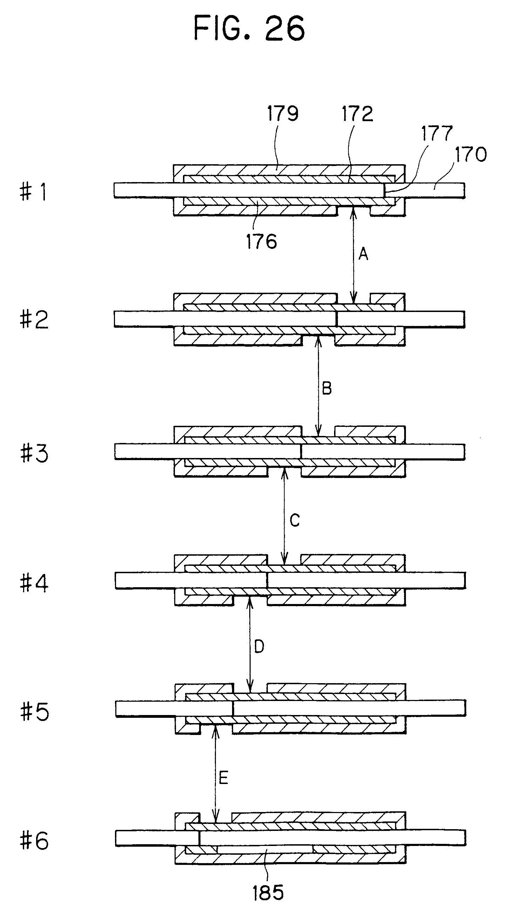

The spiral pattern electrode segments 172 and 176 are formed by a known elaborate process. The electrode segments 172, 176, the connecting lines 173, and the lead lines 174 are protected with resist coatings (or insulating layers) 179, excluding the solder parts 179 (See Fig. 26).

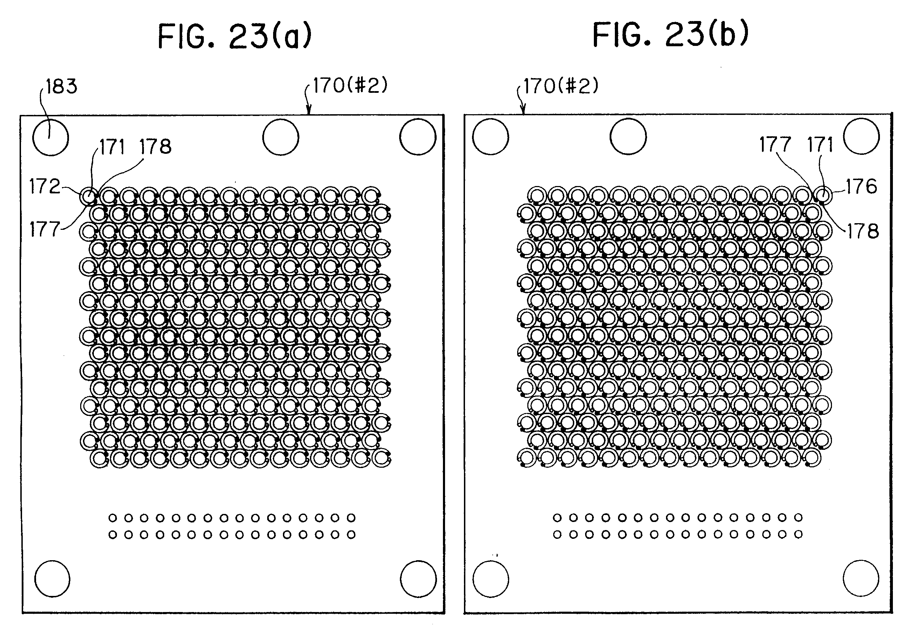

Figs. 23(a) and 23(b) are schematic views of the front and back sides of the second magnetic field generating layer 170 (#2).

Equally, the magnetic field generating layer 170 (#2) is made of the transparent resin material having the number of round-shaped light transmitting spots 171 allocated to the pixels.

As shown in Fig. 23(a), the number of spiral pattern electrode segments 172 having a shape of almost a full circle are disposed around the light transmitting spots 171 on the front side of the magnetic field generating layer 170 (#2) respectively. Similarly, the number of spiral pattern electrode segments 176 having a shape of almost a full circle are disposed around the light transmitting spot 171 on the back side of the magnetic field generating layer 170 (#2) respectively, as shown in Fig. 23(b).

The terminal end of the front side spiral pattern electrode segment 172 is connected through a through hole 177 of the magnetic field generating layer 170 (#2) to the start end of the back side spiral pattern electrode segment 176 at each light transmitting spot 171. The start end of the front side spiral pattern electrode segment 172 and the terminal end of the back side spiral pattern electrode segment 176 are provided with solders 178.

The spiral pattern electrode segments 172 and 176 are formed by a known elaborate process and are protected with resist coatings (or insulating layers) 179, excluding the solder parts 179 (See Fig. 26). The succeeding magnetic field generating layers 170 (#3 to #5) are substantially identical in construction to the previous one 170 (#2), except that the orientation of the spiral pattern electrode segments 172 and 176 is slightly shifted.

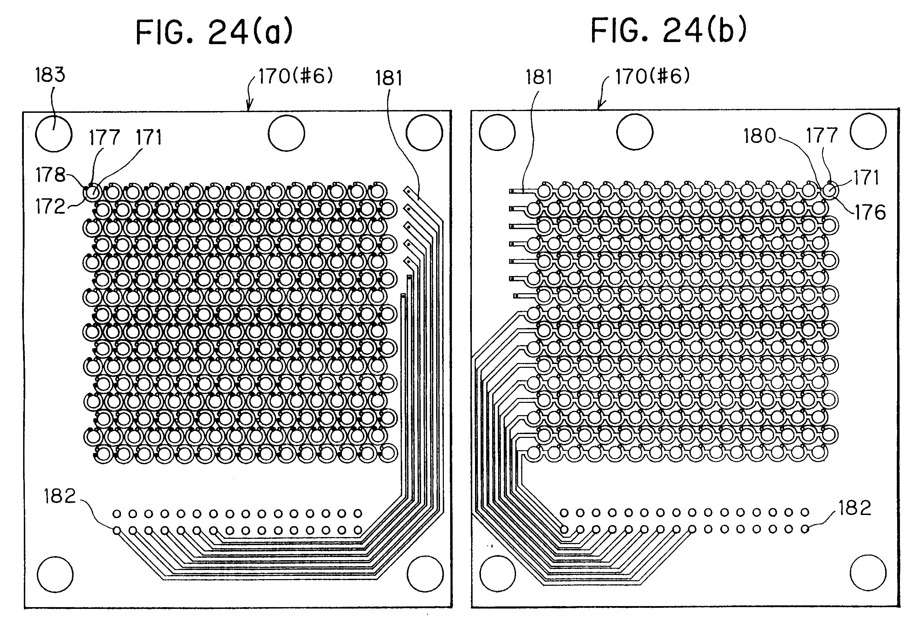

Figs. 24(a) and 24(b) are schematic views of the front side and the back side of the last magnetic field generating layer 170 (#6) respectively.

The magnetic field generating layer 170 (#6) like #1 has the number of round-shaped light transmitting spots 171 allocated to the pixels.

As shown in Fig. 24(a), the number of spiral pattern electrode segments 172 having a shape of almost a full circle are disposed around the light transmitting spots 171 on the front side of the magnetic field generating layer 170 (#6) respectively.

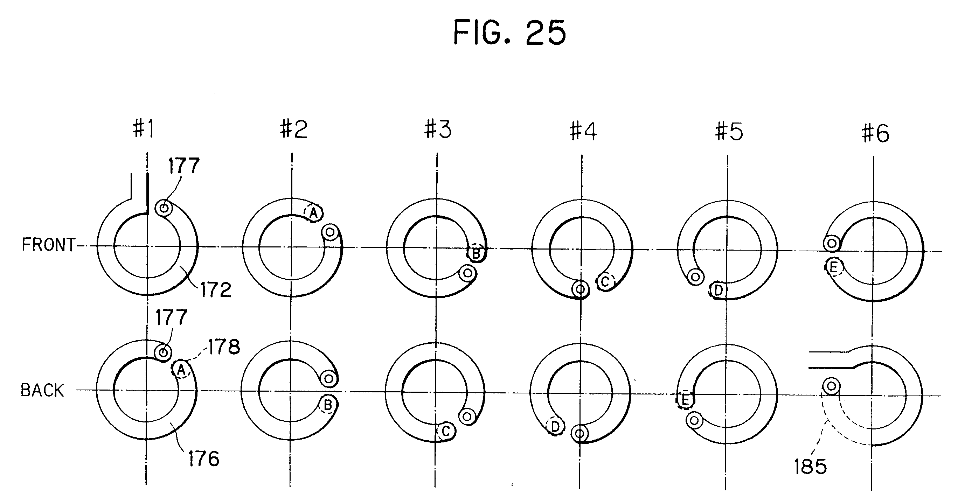

Similarly, the number of spiral pattern electrode segments 176 having a shape of almost a full circle are disposed around the light transmitting spot 171 on the back side of the magnetic field generating layer 170 (#6) respectively, as shown in Fig. 24(b). The spiral pattern electrode segments 176 in each row are connected to one another by connecting lines 180. The rows of the spiral pattern electrode segments 176 arranged in the Y direction are connected by lead lines 181 (extending both the front and back sides of the magnetic field generating layer 170 (#6)) to Y-direction terminals 182 respectively which are further communicated to a Y-direction matrix switch 167 (See Fig. 21). The terminal end of the front side spiral pattern electrode segment 172 is connected through a through hole 177 of the magnetic field generating layer 170 (#6) to one end of the back side spiral pattern electrode segment 176 at each light transmitting spot 171 of the magnetic field generating layer 170 (#6). The start end of the front side spiral pattern electrode segment 172 is provided with a solder 178. In this arrangement shown, a part of the back side spiral pattern electrode segment 176 of the last layer is eliminated for disconnection (See Fig. 25).

The spiral pattern electrode segments 172 and 176 are formed by a known elaborate process and protected with resist coatings (or insulating layers) 179, excluding the solder parts 179 (Fig. 26).

Denoted by 183 in Figs. 22 to 24 are positioning holes provided in the four corners of each magnetic field generating layer 170 for determining the position of the magnetic field generating layers 170 in a layer assembly.

The positional relationship between a series of the spiral pattern electrode segments 172 and 176 on the magnetic field generating layers 170 (#1 to #6) is shown in Figs. 25 and 26.

Fig. 25 illustrates the spiral pattern electrode segments 172 and 176 on the magnetic field generating layers 170 (#1 to #6) viewed from upper. The front side spiral pattern electrode segment 172 of the first layer #1 is connected by the through hole 177 to the start end of the back side spiral pattern electrode segment 176 of the same. The terminal end of the back side spiral pattern electrode segment 176 is joined by a joint A (where the solder 178 is applied) to the start end of the front side spiral pattern electrode segment 172 of the second layer #2 which is in turn connected at the terminal end by the through hole 177 to the back side spiral pattern electrode segment 176. In succession, the terminal end of the back side spiral pattern electrode segment 176 of the second layer #2 is joined by a joint B (with the solder 178) to the start end of the front side spiral pattern electrode segment 172 and thus to the back side spiral pattern electrode segment 176 of the third layer #3. The back side spiral pattern electrode segment 176 of the third layer #3 is joined by a joint C (with the solder 178) to the front and back side spiral pattern electrodes 172, 176 of the fourth layer #4 which are then joined by a joint D (with the solder 178) to the two spiral-pattern electrode segments 172 and 176 of the fifth layer #5. The spiral pattern electrode segments 172 and 176 of the fifth layer #5 is joined by a joint E (with the solder 178) to those of the sixth or final layer #6.

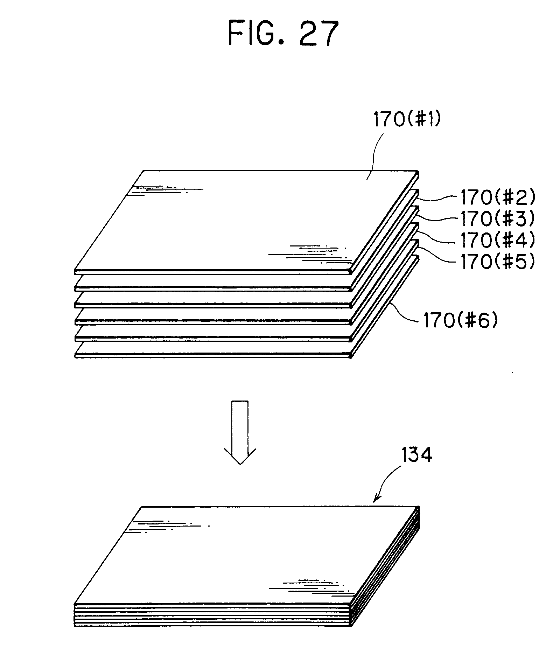

According to the arrangement, the spiral pattern electrode segments 172 and 176 can be joined to one another by placing the six magnetic field generating layers 179 (#1 to #6) one over the other under pressure and heating for a period at a temperature required for melting the solders 178 so that the layers 170 are welded at the joints A to E by the solders 178, as shown in Fig. 27.

As the result, the six magnetic field generating layers 170 turn to the magnetic field generator substrate 134 and simultaneously, the spiral pattern electrode segments 172 and 176 constitute in combination a 12-piece coil 161.

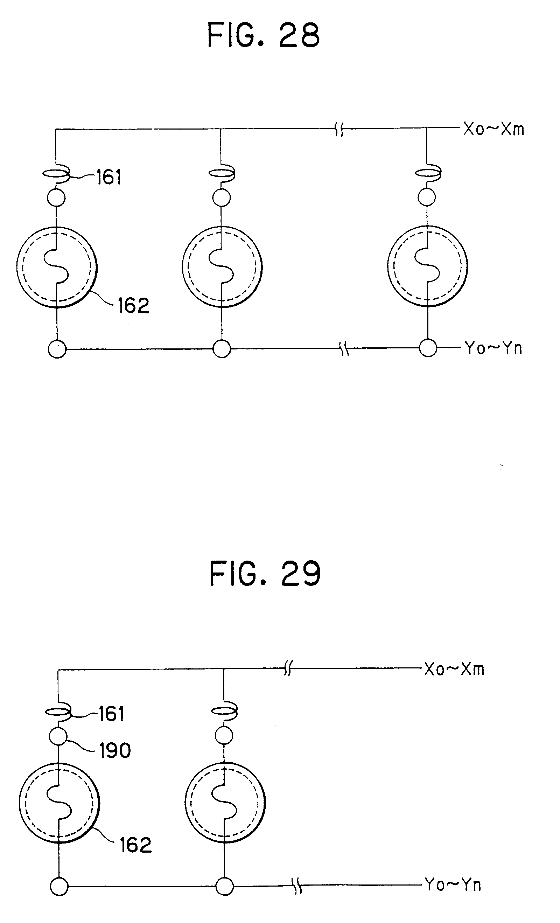

In Example 5, transparent glass-sealed diodes are used as the diodes 162 previously explained. When the magnetic field generator substrate 134 is assembled as described above, the multi-turn coils 161 are not accompanied with the diodes 161, as shown in Fig. 28. The diodes 162 are joined to their respective multi-turn coils 161 by bonding 190 after the layer assembly is completed, as shown in Fig. 29.

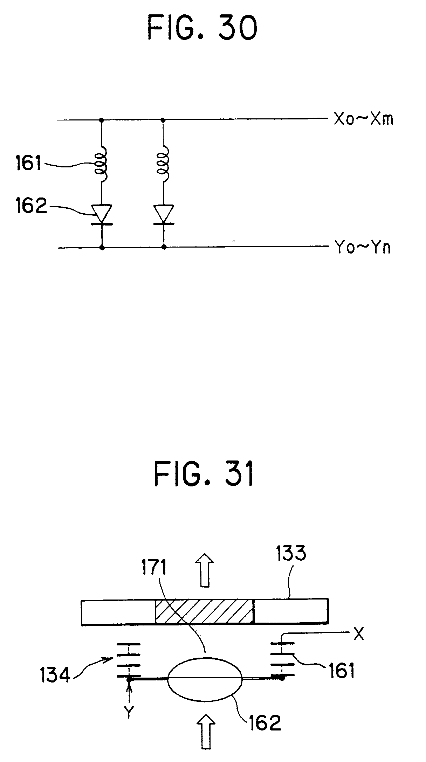

When the diodes 162 are connected to their respective multi-turn coils 161 in series, as shown in Fig. 30, they prevents the reverse of a current flow from the common line to the multi-turn coils 161, as shown in Fig. 30. Throughout Figs. 25 to 31, X0 to Xm and Y0 to Yn represent the X- direction coordinate point values and Y direction coordinate point values.

More specifically, the diode 162 is placed across the light transmitting spot of the magnetic field generator substrate 134 and bonded to electrically join the disconnection 185 of the back side spiral pattern electrode segment 176 of the last magnetic field generating layer 170 (#6), as shown in Figs.25 and 31.

Accordingly, the transparent diodes 162 will not interrupt the transmission of light across the magnetic field generator substrate 134.

The action of the magnetic fluid display of Example 5 will now be described.

The timing controller 168 when receiving an image control signal performs the on/off actions of the X- direction and Y-direction matrix switches 165, 167.

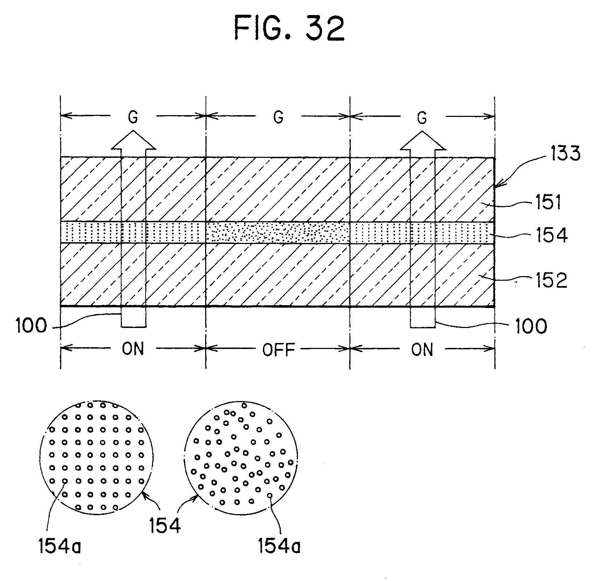

It is assumed that the image control signal is "0" for a particular pixel causing any of the two corresponding switch elements 165a and 167a of the X-direction and Y- direction matrix switches 165, 167 to be opened. Accordingly, no current is supplied to the multi-turn coil 161 at the pixel causing no magnetic field to activate a magnetic fluid 154 which is filled in the area G of the pixel and remains in the OFF state, as shown in Fig. 32.

As magnetic particles 154a in the area G remain suspended in the stable dispersed state, the magnetic fluid 154 is opaque not allowing the light to pass through.

When the image control signal is "1" for a pixel and the two corresponding switch elements 165a and 167a of both the X-direction and Y-direction matrix switches 165, 167 are closed, the multi-turn coil 161 at the pixel is energized generating a magnetic field B across the magnetic fluid 154 in the area G for shifting to the ON state as shown in Fig. 32.

As the result, the magnetic particles 154a of the magnetic fluid 154 in the area G of the ON state are aligned in the direction of the magnetic field B thus allowing an amount of light 100 to pass.

A combination of the light passing areas and the light blocking areas on the magnetic fluid display board 133 will thus produce an image pattern of the magnetic fluid.

### Example 6

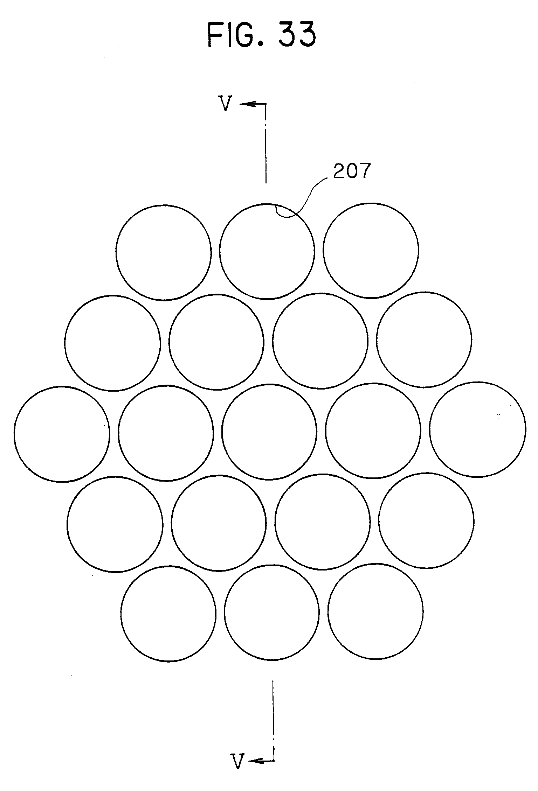

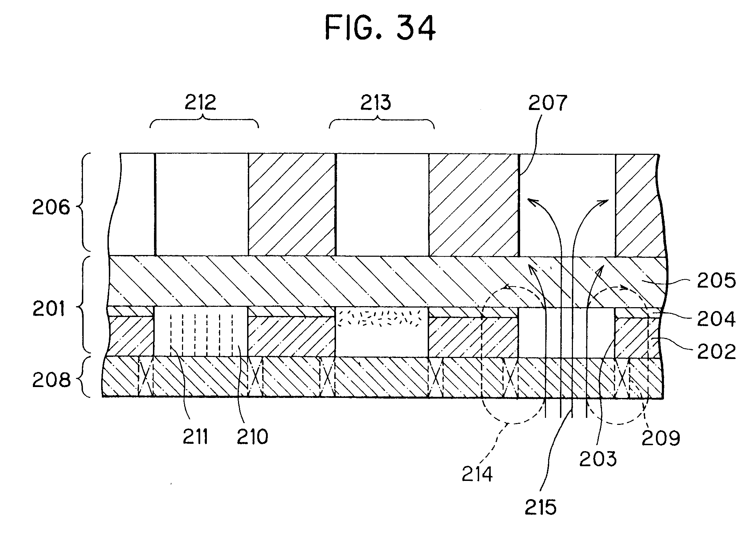

Figs. 33 and 34 show another exemplary arrangement of the magnetic fluid according to the present invention, where a magnetic fluid display board 201 is provided with a location plate 206 which acts as a means for controlling the direction of magnetic flux.

As shown, the magnetic fluid display board 201 comprises a cell base 202, a seal plate 205, and a magnetic field generator substrate 208 which all are made substantially of a transparent glass material. The cell base 202 incorporates a multiplicity of magnetic fluid filled apertures 203 arrayed at equal intervals of a pixel pitch. The magnetic fluid filled aperture 203 is filled with a magnetic fluid 211 containing magnetic particles 211 and sealed off between the seal plate 205 and the magnetic field generator substrate 208. A black painted layer 204 is inserted between any two adjacent magnetic fluid filled apertures 203 in the cell base 202 for preventing the leakage of light from the interface.

The magnetic field generator substrate 208 contains the corresponding number of multi-turn coils 209 to the apertures 203 of the cell base 202 arranged in the same manner as shown in Figs. 22 to 27. The magnetic fluid display board 201 is entirely covered at upper side with the location plate 209 which is made of a ferromagnetic material and namely, Cobal (the trade name of Westinghouse), an alloy of iron, nickel, and cobalt. The location plate 206 also has the predetermined number of circular holes 207 provided therein in place corresponding to the apertures 203 of the cell base 202.

In this arrangement, the location plate 206 is 0.5 mm in the thickness, the seal plate 205 is 0.25 mm, the cell base is 0.25 mm, and the magnetic field generator substrate 208 is 0.2 mm. The thickness of the location plate 206 and the seal plate 208 is preferably as small as possible, for example, 0.1 to 0.5 mm for the location plate 206 and 0.1 to 0.25 mm for the seal plate 205. The circular hole 207 of the location plate 206 has a diameter of 0.45 mm.

In action, when a magnetic field is generated by energization of the multi-turn coil 209 with a current, its flux lines 215 (denoted by the real lines in Fig. 34) extend more linearly across the thickness of the cell base 202 due to the presence of the location plate 206, as compared with possible flux lines 214 (denoted by the broken lines) with no location plate. Accordingly, the flux lines 215 cause the magnetic particles 211 in the aperture 203 to be aligned in desirably straight lines widthwisely of the cell base 202. More particularly, vertically extending straight rows of the magnetic particles 211 are established, as shown in the ON state 212 of Fig. 34, giving a wider space for transmission of light. Hence, the transmittance of light will be increased. In addition, the magnetization of the multi-turn coils 209 requires a less current thus contributing to the energy saving and the magnetizing power saving.

When the multi-turn coil 209 is disconnected to maintain the OFF state 213, the magnetic particles 211 are kept suspended by the action of a residual magnetism of the location plate 206 allowing the magnetic fluid 211 to be opaque. Accordingly, the magnetic particles 211 having a higher specific gravity are not aggregated near the bottom of the magnetic fluid filled aperture 203 and can quickly be aligned in vertical rows upon shifting from the OFF state to the ON state without delay of time.

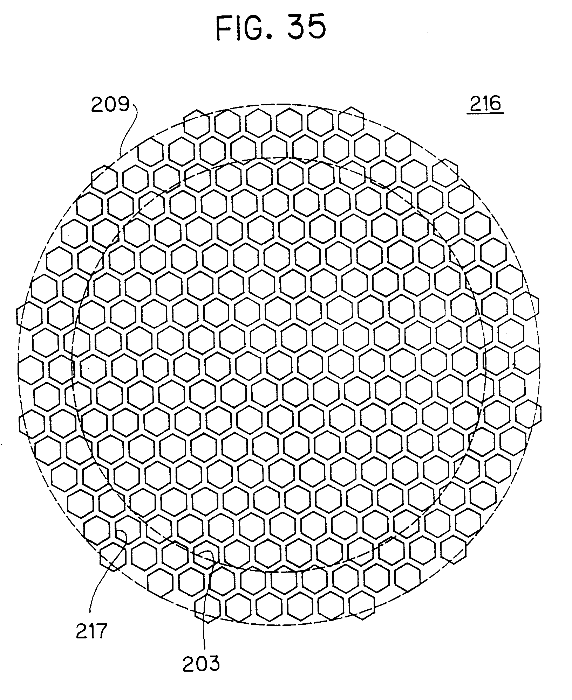

It would be understood that the location plate 206 is not limited to Cobal but may be a ferromagnetic material, e.g. a nickel alloy, barium ferrite, or gamma iron oxide.
Although the hole 207 of the location plate 206 and the aperture 203 of the cell base 202 are arranged 1:1 in the diameter, a more number of tiny holes 217 may be provided in the location plate 206 corresponding to the single aperture 203 of the cell base 202 as best shown in Fig. 35. In the latter case, the tiny holes 217 are preferably formed of a hexagonal shape in cross section thus constituting a honeycomb structure. This allows minimizing the area of interrupting the transmission of light and optimizing the opening in cross section. It is obvious that the location plate 206 having the holes 207 or 217 is employed in Examples 1 to 5 with equal success.

As set forth above, according to the teaching of the present invention defined in claims 1 to 9, an advanced display is provided in which the magnetic fluid is used and activated in small areas of a pixel size by magnetic fields selectively in response to data of an image signal to determine the orientation of magnetic particles in the magnetic fluid for forming a combination of light transmitting areas and light blocking areas which represents an image, and will be higher in the resistance to heat and ultraviolet ray and more simple in the fabrication than conventional liquid crystal displays.

The display according to the present invention is favorably increased in the screen size to not only a 50-inch but also a 100-inch or 200-inch wide, which is hardly feasible for common liquid crystal displays. It may also be possible to realize large-screen on-the-wall television receivers or use with indoor and outdoor advertising means such as billboards and a wide range of visual commodities.

According to the teaching of the present invention defined in claim 2, a multiplicity of magnetic fluid filled compartments are assigned to their respective pixels and can be activated separately by the action of corresponding magnetic fields so that an image will be produced precisely and clearly under positive control.

According to claim 3, as a given number of the magnetic fluid filled compartments are combined to form a display cell, a desired size of the screen will readily be constructed by joining a corresponding number of the display cells together.

As defined in claims 6 to 9, while a plurality of the magnetic field generating layers, each having two spiral-pattern electrode segments provided on the front and back sides thereof respectively, are placed one over the other so that each series of the spiral-pattern electrode segments constitute a multi-turn coil, the overall thickness of the magnetic field generator substrate is considerably reduced as compared with using common solenoid coils. Accordingly, while the magnetic fluid display is minimized in the thickness, the generation of magnetic fields for orientating the magnetic fluid can be implemented effectively using a smaller current.

Also, as defined in claim 8, while a group of the multi-turn coils being electrically communicated to the common line, each is joined by a current-flow regulator element to the common line for allowing only one-way current flow from the multi-turn coil to the common line. An unwanted reverse of the flow from the common line to the multi-turn coil is thus prevented, whereby a relevant circuitry arrangement will successfully be specified for common use.

As defined in claim 9, the current-flow regulator element is a transparent glass-sealed diode which can be mounted across the light transmitting spot, thus providing layout flexibility.

According to the teaching of claim 10, the multi-turn coils of desired output can be constructed by simply bonding a corresponding number of the magnetic field generating layers one over the other.

As defined in claim 11, while the multi-turn coils joined to the common line are constructed by joining the spiral-pattern electrode segments bonding in layers, a system for preventing a reverse current flow from the common line to the multi-turn coils is also realized.

The present invention is not limited to the embodiments and examples but a variety of changes and modifications will be possible without departing the scope and spirit of the present invention. The previous embodiments and examples are illustrative and should not be interpreted to limitatives. The scope of the present invention is only defined by the following claims and not bound by details of the specification. It is understood that all the changes and modifications of the teachings of the claims fall within the scope of the present invention.

## Claims

1. A magnetic fluid display having a display unit which carries a multiplicity of pixel areas arranged variable in the transmittance of light with data of an image signalt, comprising: a magnetic fluid display board (1) comprising a magnetic fluid (4) which contains magnetic particles (4a) dispersed uniformly and suspended constantly and is filled in a space (3) provided between two equally spaced transparent panels (2); and an image display controlling means (5) for generating selectively in response to the data of the image signal a matrix of magnetic fields (B) towards the pixel areas on and across the thickness of the magnetic fluid display board (1) to act upon the magnetic fluid (4).

2. A magnetic fluid display according to claim 1, wherein the image display controlling means (5) comprises an X-direction common electrode mounted on one side of a transparent substrate and a Y-direction common electrode mounted on the other side of the same which both are joined each other by spiral electrodes corresponding to the pixel areas.

3. A magnetic fluid display according to claim 1, wherein the magnetic fluid display board (1) contains a controlling means for determining the direction of a magnetic flux.

4. A magnetic fluid display according to claim 1, wherein the magnetic fluid display board (1) has the space (3) divided into magnetic fluid filled compartments corresponding to the pixel areas.

5. A magnetic fluid display according to claim 4, wherein the magnetic fluid display board (1) comprises a group of joinable display cell units each having a number of the magnetic fluid filled compartments for the pixels.

6. An image display controlling apparatus for use in a magnetic fluid display having a display unit which carries a multiplicity of pixel areas arranged variable in the transmittance of light with data of an image signal, which is directly mounted on the back side of a magnetic fluid display board (1), which comprises a magnetic fluid (4) containing magnetic particles (4a) dispersed uniformly and suspended constantly and filled in a space (3) between two equally spaced transparent panels (2), for generating selectively in response to the data of the image signal a matrix of magnetic fields (B) towards the pixel areas on and across the thickness of the magnetic fluid display board (1), said image display controlling apparatus comprising: a magnetic field generator substrate (15) consisting mainly of a plurality of magnetic field generating layers (16), each said magnetic field generating layer (16) having a multiplicity of light transmitting spots (7) thereof corresponding to the pixel areas arrayed at equal intervals of a pixel pitch on the magnetic fluid display board (1) and two spiral-pattern electrode segments (9) mounted on both, front and back, sides thereof to extend around the light transmitting spot (7) and protected with insulating coatings (8), said two spiral-pattern electrode segments (9) on both the sides being electrically joined to each other through an aperture (16a) provided in the magnetic field generating layer (16), the back side one of said two spiral-pattern electrode segments (9) of the magnetic field generating layer (16) being joined at one end other than the aperture (16a) end by a conductive joining member (11) to the spiral-pattern electrode segment (9) of the succeeding magnetic field generating layer (16) so that a combination of the spiral-pattern electrode segments (9) constitute a multi-turn coil (12) which extends throughout the thickness of the magnetic field generator substrate (15) towards the corresponding pixel and can be energized by the image signal.

7. An image display controlling apparatus according to claim 6, wherein the magnetic fluid display board (1) contains a controlling means for determining the direction of a magnetic flux.

8. An image display controlling apparatus according to claim 6, wherein while the multi-turn coils (12) in the magnetic field generator substrate (15) are electrically communicated to a common line (13), each of them is joined to the common line (13) by a current-flow regulator element (14) disposed in series for allowing one directional flow from the multi-turn coil (12) to the common line (13).

9. An image display controlling apparatus according to claim 8, wherein the current-flow regulator element (14) is a transparent glass-sealed diode mounted relative to the corresponding light transmitting spot (7) of the magnetic field generating layer (16).

10. A method of producing the image display controlling apparatus defined in claim 6, comprising the steps of: forming the two, front and back, spiral-pattern electrode segments (9) and the aperture (16a) about the light transmitting spot (7) of each magnetic field generating layer (16) and also, placing the conductive joining member (11) between the other ends than the aperture (16a) ends of any two directly adjacent magnetic field generating layers (16); and bonding a pile of the magnetic field generating layers (16) to the magnetic field generator substrate (15) by heating the magnetic field generating layers (16) under high pressure to a temperature required for fusing the conductive joining members (11).

11. A method of producing the image display controlling apparatus defined in claim 8, comprising the steps of: forming the two, front and back, spiral-pattern electrode segments (9) and the aperture (16a) about the light transmitting spot (7) of each magnetic field generating layer (16) and also, placing the conductive joining member (11) between the other ends than the aperture (16a) ends of any two directly adjacent magnetic field generating layers (16); bonding a pile of the magnetic field generating layers (16) to the magnetic field generator substrate (15) by heating the magnetic field generating layers (16) under high pressure to a temperature required for fusing the conductive joining members (11); and mounting the current-flow regulator elements (14) between their respective multi-turn coils (12) and the common line (13) in the magnetic field generator substrate (15).
